# EUROPEAN PATENT APPLICATION

(11) **EP 1 068 921 A1**
(43) Date of publication of application: **17.01.2001**
(21) Application number: 99250397.9
(22) Date of filing: 09.11.1999
(51) Int. Cl.: B23H 9/00, B23H 9/06, F16C 33/10

(54) **Device for electrolytically machining microgrooves on internal surface of aerodynamic bearing housing**

(30) Priority: 14.07.1999 KR 9929196
(71) Applicant: Lee, Eun Sang, Pusan (KR); Won, Chan Hui, Taejon (KR); Park, Jeong Woo, Pusan (KR)
(72) Inventor: Lee, Eun Sang, Pusan (KR); Won, Chan Hui, Taejon (KR); Park, Jeong Woo, Pusan (KR)
(74) Representative: Hengelhaupt, Jürgen, Dipl.-Ing.

(57) **Abstract**

A device for machining microgrooves on the internal surface of an aerodynamic bearing housing through an electrolytic machining process is disclosed. In order to form the desired microgrooves on the bearing housing, a roller electrode is concentrically received within the bearing housing, with a uniform gap defined between the roller electrode and the bearing housing. Pluralities of grooves are formed on the external surface of the roller electrode and are preferably filled with an insulating material. The insulating material is leveled with the lands of the roller electrode, thus forming a continuous external surface of the roller electrode. A power source applies a negative voltage to the roller electrode and a positive voltage to the bearing housing. An electrolyte feeder supplies electrolyte into the gap between the roller electrode and the bearing housing. When the voltages are applied to both the bearing housing and the roller electrode, desired microgrooves, having a rectangular cross-section and a uniform depth, are formed on the internal surface of the bearing housing through an electrolytic machining process at portions corresponding to the lands of the roller electrode.

## Description

### BACKGROUND OF THE INVENTION

### Field of the Invention

The present invention relates, in general, to the machining of microgrooves on the internal surface of an aerodynamic bearing housing and, more particularly, to a device for machining desirable microgrooves on the internal surface of an aerodynamic bearing housing through an electrolytic machining process.

### Description of the Prior Art

As well known to those skilled in the art, it is necessary for a bearing housing for shafts to be designed to support the rotating motion of a shaft without coming into frictional contact with the shaft. In order to accomplish the above object, a lubrication fluid is filled in the gap between the shaft and the bearing housing, thus allowing the bearing housing to support the rotating motion of the shaft without forming a frictional force within the gap. In the prior art, it is conventional to fill lubrication oil in the gap between a bearing housing and a shaft. However, such a bearing with lubrication oil is problematic in that heat is generated in the gap between the shaft and the bearing housing when the shaft is rotated at a high speed, thus highly increasing the temperature of the lubrication oil within the gap. Such a bearing, with lubrication oil, is thus not suitable for being used with a high speed rotating shaft.

In order to support such high speed rotating shafts, aerodynamic bearings, designed to support a rotating shaft using a predetermined air pressure acting in the gap between the bearing housing and the shaft, have been proposed and widely used. Such an aerodynamic bearing is set on a high speed rotating shaft while forming a micro gap between the shaft and a bearing housing with a predetermined air pressure being formed in the micro gap. Due to the air pressure within the gap, the shaft is rotatable at a high speed without coming into contact with the internal surface of the bearing housing of the aerodynamic bearing.

In the aerodynamic bearings, it is necessary to regularly form pluralities of microgrooves on either the internal surface of the bearing housing or the external surface of the shaft. The objective of the microgrooves is to form a predetermined air pressure within the gap between the shaft and the bearing, thus allowing the shaft to be supported by the bearing while being free from coming into contact with the bearing housing.

Conventional experimental reports concerning such aerodynamic bearings disclose as follows. That is, it is most preferable to form such microgrooves in a herringbone arrangement on either the external surface of a shaft or the internal surface of a bearing housing. In addition, the microgrooves preferably have a rectangular cross-section. The herringbone microgrooves, having a rectangular cross-section, are particularly suitable for forming a desired air pressure within the gap between a shaft and a bearing housing during a high speed rotating motion of the shaft. It is also preferable to give a depth of 5 - 10 pm to the rectangular cross-sectional grooves. Such a depth of the microgrooves creates a desired operational stability of the aerodynamic bearings.

In the prior art, such microgrooves are conventionally formed on the external surface of a shaft rather than the internal surface of a bearing housing. The microgrooves may be formed on the external surface of a shaft through various processes, such as a form rolling process, an etching process, a rolling process, and a machining process using a special-purpose tool.

For example, in a conventional form rolling process, such microgrooves are formed on the external surface of the shaft using a tool pressed onto the external surface of the shaft. However, such a form rolling process is problematic in that it only forms microgrooves having a triangular cross-section which is not suitable for creating a desired air pressure within the gap between the shaft and the bearing housing.

In a conventional etching process of forming the microgrooves, it is necessary to perform a plurality of steps to form the desired grooves while excessively consuming processing time. Another problem of the etching process resides in that the etched surface is not even, and so the grooves may fail to accomplish the desired operational effect.

In a conventional rolling process, a roller, having a plurality of micro lands corresponding to desired microgrooves on its external surface, is rotated while coming into pressure contact with the external surface of a shaft, thus forming the desired microgrooves on the external surface of the shaft. However, such a rolling process is problematic in that it forms elevations along the edges of the microgrooves, thus severely reducing the operational performance of a resulting bearing. In addition, it is necessary for bearing manufacturers to have a plurality of rollers having a variety of sizes corresponding to the different sizes of shafts. Such a roller must be machined to form micro lands on its external surface, the lands corresponding to desired microgrooves of a shaft. Therefore, the rolling process forces the bearing manufacturers to separately produce such rollers and is very inconvenient to the manufacturers.

In the prior art, microgrooves may be formed on the external surface of a shaft using a special-purpose tool with a ball. However, the process, using a special-purpose tool, only forms the microgrooves on the external surface of a shaft one by one, thus being complicated and excessively consuming time while forming the microgrooves on the shaft. In addition, this process only forms microgrooves having a semicircular cross-section that is not suitable for creating a desired air pressure within the gap between the shaft and the bearing housing.

In a brief description, the conventional processes of forming microgrooves on a shaft are problematic in that they form the grooves one by one, thus excessively consuming processing time. Another problem of the above processes resides in that the cross-section of resulting microgrooves is not rectangular, and so the microgrooves may fail to create a desired air pressure within the gap between the shaft and the bearing housing.

### SUMMARY OF THE INVENTION

Accordingly, the present invention has been made keeping in mind the above problems occurring in the prior art, and an object of the present invention is to provide a device for machining microgrooves on the internal surface of an aerodynamic bearing housing through an electrolytic machining process, the resulting microgrooves being suitable for creating a desired air pressure allowing a smooth rotating motion of a shaft within the bearing housing without forming any frictional force between the shaft and the bearing housing.

Another object of the present invention is to provide a device for machining microgrooves on the internal surface of an aerodynamic bearing housing through an electrolytic machining process, which is designed to prevent a concentration of electric charge at a discontinuous part, such as corners of a roller electrode to which a negative voltage is applied, thus effectively forming desired microgrooves having a uniform depth.

In order to accomplish the above object, the present invention provides a device for machining pluralities of microgrooves on the internal surface of a cylindrical aerodynamic bearing housing, comprising: a roller electrode concentrically received within the bearing housing while forming a uniform gap between the roller electrode and the bearing housing, with a plurality of regularly spaced grooves being formed on the external surface of the roller electrode; a power source applying a negative voltage to the roller electrode and a positive voltage to the bearing housing; and means for feeding an electrolyte into the gap between the roller electrode and the bearing housing.

When currents having predetermined voltages are applied to both the bearing housing and the roller electrode, desired microgrooves are formed on the internal surface of the bearing housing through an electrolytic machining process at portions corresponding to the lands of the roller electrode. The device of this invention has a simple construction, and quickly forms the desired uniform microgrooves on the internal surface of the bearing housing. Such uniform microgrooves effectively form a desired air pressure within the gap between the bearing housing and a shaft.

In the above device, an insulating material is filled in the grooves of the roller electrode. In such a case, the insulating material, filled in the grooves of the roller electrode, is leveled with the lands of the roller electrode, thus forming a continuous external surface of the roller electrode.

Since the grooves of the roller electrode are filled with the insulating material as described above, a uniform current density is formed on the lands between the grooves of the roller electrode. Due to such a uniform current density, it is possible to form microgrooves, having a desired rectangular cross-section, on the internal surface of the bearing housing. In the above device, the grooves of the roller electrode are formed in a herringbone arrangement, and so the desired microgrooves are electrolytically formed in a herringbone arrangement on the internal surface of the bearing housing. Due to the herringbone arrangement, the microgrooves most effectively form a desired air pressure within the gap between the shaft and the bearing housing.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a schematic perspective view, showing the construction of an electrolytic machining device in accordance with the preferred embodiment of the present invention;
Fig. 2 is a perspective view, showing the structure of a roller electrode included in the device of this invention;
Fig. 3 is a cross-sectional view of the roller electrode taken along the line A-A of Fig. 2;
Fig. 4 is a perspective view of an aerodynamic bearing housing, showing microgrooves formed on the interior surface of the housing by the device of this invention;
Fig. 5A is a cross-sectional view, showing a microgroove formed on the interior surface of an aerodynamic bearing housing through an electrolytic machining process performed by the device of this invention without having an insulating material in the grooves of the roller electrode; and
Fig. 5B is a cross-sectional view, showing a microgroove formed on the interior surface of an aerodynamic bearing housing through an electrolytic machining process performed by the device of this invention with an insulating material being filled in the grooves of the roller electrode.

### DESCRIPTION OF THE PREFERRED EMBODIMENTS

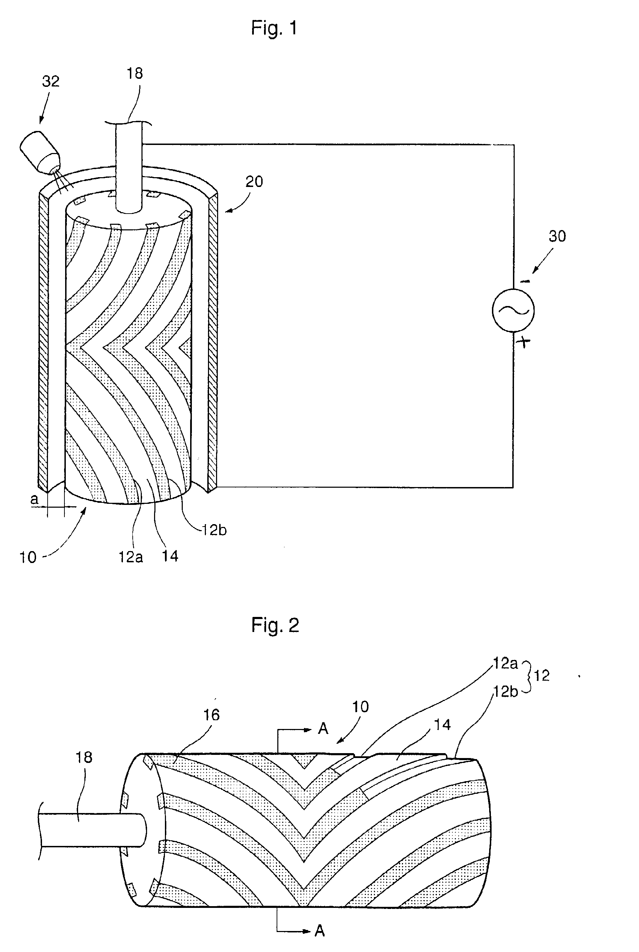

Fig. 1 is a schematic perspective view, showing the construction of an electrolytic machining device in accordance with the preferred embodiment of the present invention. As shown in the drawing, the device for machining microgrooves on the internal surface of an aerodynamic bearing housing 20 through an electrolytic machining process according to this invention comprises a cylindrical roller electrode 10 and a power source 30. During an electrolytic machining process, the roller electrode 10 is received in the housing 20, with a uniform gap "a" being defined between the external surface of the electrode 10 and the internal surface of the housing 20. The power source 30 supplies voltages to both the roller electrode 10 and the bearing housing 20.

That is, the power source 30 is electrically connected to both the roller electrode 10 and the bearing housing 20 in a way such that the power source 30 supplies a positive voltage to the housing 20 and a negative voltage to the roller electrode 10. When current from the power source 30 flows to both the roller electrode 10 and the bearing housing 20 with an insulating material being filled in the gap "a" between the roller electrode 10 and the bearing housing 20, the internal surface of the housing 20 is machined through an electrolytic process. That is, pluralities of microgrooves are formed on the internal surface of the housing 20 through an electrolytic machining process.

The roller electrode 10 is a cylindrical member that is made of a conductive material and is received in the aerodynamic bearing housing 20 with the uniform gap "a" being defined between the external surface of the electrode 10 and the internal surface of the housing 20. The above electrode 10 is electrically connected to the negative pole of the power source 30. As shown in Fig. 2, pluralities of grooves 12, having a rectangular cross-section, are regularly formed in a herringbone arrangement on the external surface of the roller electrode 10. Each groove 12 in the herringbone arrangement has a V-shaped profile. A V-shaped land 14, having a rectangular cross-section, is left between the grooves 12a and 12b, and so pluralities of lands 14 of the roller electrode 10 form a herringbone arrangement. The herringbone lands 14, defined between the grooves 12 on the roller electrode 10, are electrolytic machining parts, which form desired herringbone microgrooves on the internal surface of the bearing housing 20 through an electrolytic process when a negative voltage from the power source 30 is applied to the roller electrode 10. Therefore, it is necessary for the lands 14 to have the same profile and dimension as those of desired microgrooves to be machined on the internal surface of the housing 20.

In addition, it is preferable to fill an insulating material 16, such as epoxy resin, in the grooves 12 of the roller electrode 10. The object of such an insulating material 16 is to prevent a concentration of electric charge at a discontinuous part, such as the corners of the lands 14 of the roller electrode 10, during an electrolytic machining process as will be described later herein. The insulating material 16 finally prevents the housing 20 from being machined more deeply at portions, corresponding to the corners of the lands 14, due to more active electrolytic elution. Therefore, it is possible to more effectively form desired microgrooves having a uniform depth on the housing 20.

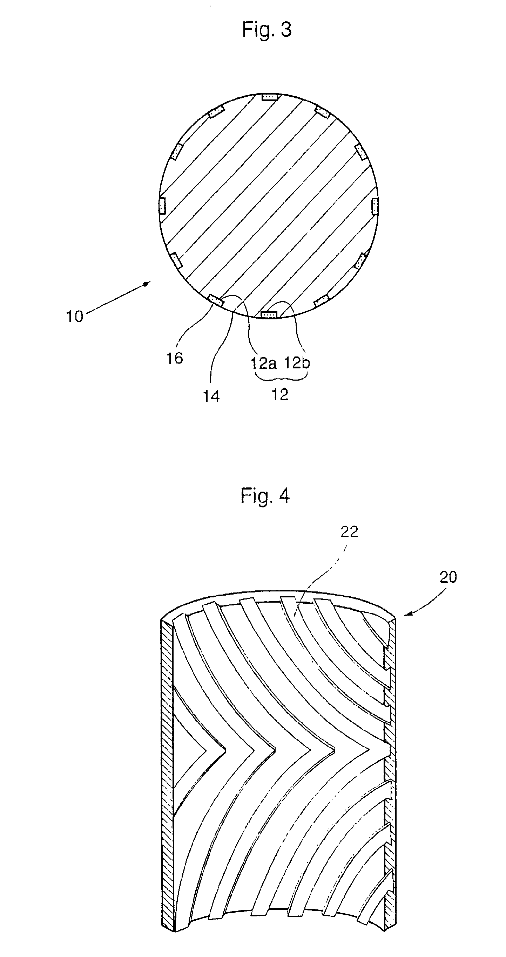

As shown in Fig. 3, which is a sectional view taken along the line A-A of Fig. 2, it is preferable to fill the insulating material 16 in the grooves 12 of the roller electrode 10 in a way such that the roller electrode 10 has a circular cross-section. When the roller electrode 10 accomplishes a genuine cylindrical appearance due to the insulating material 16 filled in the grooves 12, the exterior surface of the roller electrode 10 becomes continuous while being free from corners around the grooves 12. Therefore, when a current flows to the lands 14 of the roller electrode 10, the roller electrode 10 has a uniform current density at the lands 14, and so it is possible to effectively form desired microgrooves having a uniform depth on the internal surface of the housing 20.

Referring to Fig. 1, the roller electrode 10 is received in the housing 20, with a uniform gap "a" being defined between the external surface of the electrode 10 and the internal surface of the housing 20. During a conventional electrolytic machining process, it is typical to set the gap between an electrode and an object to be machined to about 0.02 to 0.7 mm. In addition, it is preferable to make a uniform gap "a" between the external surface of the roller electrode 10 and the internal surface of the housing 20. In the preferred embodiment of the drawings, the roller electrode 10 is electrically connected to the power source from an extension shaft 18, which axially and concentrically extends at one end of the electrode 10. The above extension shaft 18 is used for an electric connection of the roller electrode 10 to the power source 30 and is used as a means for allowing a setting device (not shown) to clamp the roller electrode 10 while concentrically setting the electrode 10 within the housing 20.

The desired conditions of the internal surface of such a bearing housing 20 will be described herein below. In a conventional aerodynamic bearing, it is necessary to keep a gap of less than several micrometers between a bearing housing and a rotating shaft. In order to minimize the frictional effect between the bearing housing and the shaft and to accomplish a desired stable bearing performance, it is necessary to precisely machine both the internal surface of the bearing housing and the external surface of the shaft in addition to an accomplishment of precisely machined size and appearance of both the bearing housing and the shaft. Therefore, the internal surface of the housing 20 has to be machined as follows to have a mirror surface.

In order to produce such a bearing housing 20, a cylindrical member is primarily subjected to a drilling process, and so an opening of a predetermined dimension is formed in the housing. Since the drilled opening does not have a precise dimension, the opening has to be subjected to a reaming process after the drilling process, and so the housing has a primarily machined size and precision. The reaming process is followed by a polishing process wherein the internal surface of the housing is polished by a lapping tool with free abrasives being filled between the lapping tool and the internal surface of the housing. Therefore, it is possible to increase the precision of the internal surface of the housing 20 to a desired level. The internal surface of the housing 20 is precisely machined to have a desired mirror surface.

The object of machining a mirror surface on the internal surface of the housing 20 is to accomplish a stable pumping operation between the external surface of the high speed rotating shaft and the internal surface of the housing 20. That is, when the internal surface of the housing 20 fails to have such a desired mirror surface, the housing 20 has a reduced surface precision at its internal surface, but is undesirably curved at the internal surface. In such a case, the bearing housing 20 fails to accomplish a desired bearing performance.

It is also necessary to make such a mirror surface on the external surface of the shaft in addition to the internal mirror surface of the bearing housing. In order to make such a desired shaft, a shaft material is cut into a desired dimensional shaft member. The shaft member is, thereafter, subjected to a primary precise machining process using a cylindrical grinding machine for machining the external surface of the shaft member. The primary precise machining process is followed by a polishing process. In the polishing process, the external surface of the shaft member is polished by a lapping tool using free abrasives in the same manner as that described above. The external surface of the shaft is thus machined to become a mirror surface.

An electrolyte is filled in the gap "a" between the roller electrode 10 and the bearing housing 20. Such an electrolyte is fed by an electrolyte feeder 32 and may be selected from the group consisting of NaCl, NaNO₃, KNO₃, and NaClO₃. During a continued electrolytic machining process, an electrolytic product is generated in the electrolyte due to an electrolytic elution occurring at the housing 20, and so the electrolyte is heated. Such a heated electrolyte or the generation of the electrolytic product gives a bad effect to the electrolytic machining process. It is thus necessary to continuously feed the electrolyte to the gap "a" between the roller electrode 10 and the bearing housing 20 at a constant rate using such an electrolyte feeder 32. It is also possible to feed the electrolyte to the gap "a" while filtering the electrolytic product using a filtering machine and reducing the temperature of the electrolytic product.

Of course, the construction of the electrolyte feeder 32 used in the present invention is not limited to that shown in the accompanying drawings, but may be somewhat freely changed if the resulting electrolyte feeder can meet the above-mentioned desired operational conditions. For example, it is possible to perform an electrolytic machining process of this invention within a container filled with electrolyte. However, in such a case, it should be understood that the electrolytic machining process has to be performed with a device for filtering and draining the electrolytic product, which is formed by a reaction with the H₂O component of the electrolyte within the container.

As described above, the microgroove machining device of this invention effectively forms desired microgrooves on the internal surface of an aerodynamic bearing housing 20 through an electrolytic machining process, wherein voltages of a power source are applied to both the bearing housing 20 and a roller electrode 10 with the electrode 10 being concentrically received within the housing 20.

When currents, having predetermined voltages, for example, 5 - 20 V, are applied to both a bearing housing 20 and a roller electrode 10 with the electrode 10 being concentrically received within the housing 20, an electrolytic reaction occurs between the two members 10 and 20. In such a case, an electrolytic elution occurs at the bearing housing 20 to which a current having a positive voltage is applied, and so the internal surface of the bearing housing 20 is machined at portions corresponding to the lands 14 of the roller electrode 10, thus forming desired microgrooves having a uniform depth. Such an electrolytic machining process is well known to those skilled in the art and further explanation is thus not deemed necessary.

That is, such an electrolytic machining process creates an electrolytic elution on the internal surface of the bearing housing 20 at portions corresponding to the lands 14 of the roller electrode 10, and so desired microgrooves having a shape corresponding to the lands 14 of the roller electrode 10 are formed on the internal surface of the bearing housing 20. Fig. 4 is a perspective view of the aerodynamic bearing housing 20, showing the microgrooves 22 formed on the interior surface of the housing 20 by the electrolytic machining device of this invention.

The machining speed for the internal surface of the bearing housing 20 is affected by the current density. That is, the machining speed for the housing 20 is increased in proportion to the current density. This means that the microgrooves, formed on the internal surface of the bearing housing 20, are deeper in proportion to the current density.

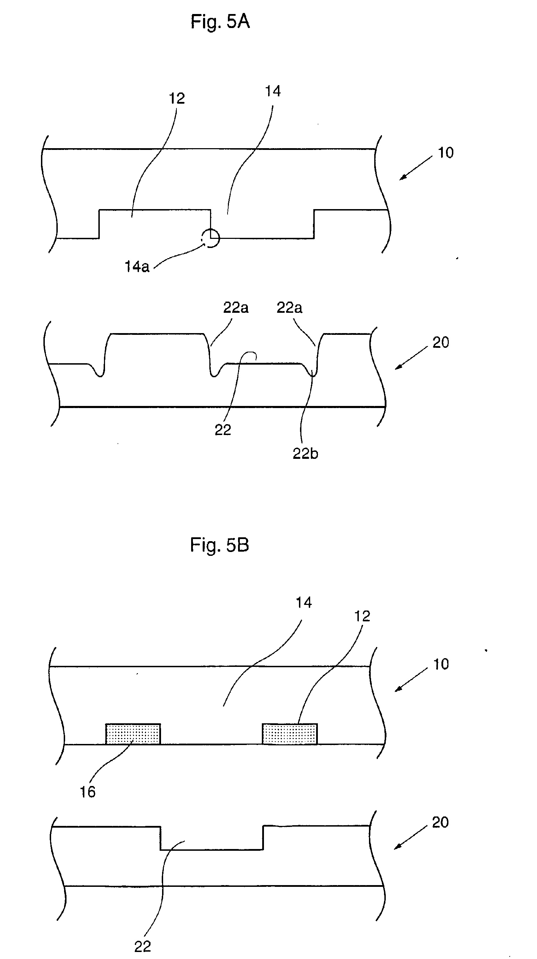

The relation of the microgrooves, formed on the internal surface of the bearing housing 20, to the roller electrode 10 having both the grooves 12 and the lands 14 is shown in Figs. 5A and 5B.

That is, Fig. 5A is a cross-sectional view, showing a microgroove 22 formed on the interior surface of an aerodynamic bearing housing 20 through an electrolytic machining process performed by the device of this invention without having an insulating material within the grooves 12 of the roller electrode 10. Fig. 5B is a cross-sectional view, showing a microgroove 22 formed on the interior surface of an aerodynamic bearing housing 20 through an electrolytic machining process performed by the device of this invention with an insulating material being filled in the grooves 12 of the roller electrode 10.

As shown in Fig. 5A, the microgroove 22, formed on the internal surface of the bearing housing 20 by the roller electrode 10 free from an insulating material in the grooves 12, does not have a rectangular cross-section. In such a case, the microgroove 22 is inclined upwardly and outwardly at both sidewalls 22a thereof with a notch 22b being formed at each corner of the bottom. The microgrooves 22, having such a cross-section, are not suitable for generating a desired air pressure within the gap "a" between the bearing housing 20 and a shaft when the shaft is rotated within the bearing housing 20 at a high speed.

Such a cross-section of the microgrooves 22, shown in Fig. 5A, is caused by the fact that the grooves 12 of the roller electrode 10 are not filled with the insulating material. When voltages from a power source 30 are applied to both the roller electrode 10 and the bearing housing 20, a current is concentrated at the corners 14a of the lands 14 of the roller electrode 10. Such a concentration of the current at the corners 14a finally results in a partial increase in the current density at the gaps between the corners 14a and the corresponding portions of the bearing housing 20. Such a partially increased current density creates a more active electrolytic elution at the corners of the microgrooves 22 of the bearing housing 20 corresponding to the corners 14a of the lands 14 of the roller electrode 10. This finally results in a formation of the above-mentioned notches 22b at the corners of the microgrooves 22.

In such a roller electrode 10, a current is applied to the portions around the sidewalls of the lands 14, and so a substantial current density is formed at the sidewalls. Therefore, the microgrooves 22 of the bearing housing 20 are inclined upwardly and outwardly at both sidewalls 22a corresponding to the sidewalls of the lands 14.

The microgrooves 22 of the bearing housing 20, which is inclined upwardly and outwardly at both sidewalls 22a thereof as described above, are reduced in air pressure formation efficiency in comparison with microgrooves having a desired rectangular cross-section. This is well known to those skilled in the art. In a brief description, the microgrooves 22 of Fig. 5A fail to form a desired air pressure within the gap between the bearing housing 20 and a shaft.

On the other hand, Fig. 5B shows that the microgroove 22, formed on the internal surface of the bearing housing 20 by the roller electrode 10 having an insulating material filled in the grooves 12, has a desired rectangular cross-section. Such a rectangular cross-section of the microgrooves 22, shown in Fig. 5B, is caused by the fact that the grooves 12 of the roller electrode 10 are filled with the insulating material. When the insulating material is filled in the grooves 12 of the roller electrode 10 as described above, the external surface of the roller electrode 10 has a practically continuous surface, which is free from a concentration of current. This finally allows the current density on the external surfaces of the lands 14 to be uniform. In addition, since the current density around the grooves 12 filled with the insulating material 16 is reduced to be negligible, the microgrooves 22, formed on the internal surface of the bearing housing 20, have a desired rectangular cross-section.

As described above, the present invention provides an electrolytic machining device for forming microgrooves on the internal surface of an aerodynamic bearing housing through an electrolytic machining process. In the present invention, the electrolytic machining process is performed by the device of this invention, wherein a roller electrode is concentrically received within the bearing housing with a uniform gap being defined between the roller electrode and the bearing housing. The electrolytic machining device of this invention precisely forms desired microgrooves on the internal surface of the bearing housing. Since the microgrooves, formed on the bearing housing by the device of this invention, have a desired rectangular cross-section and a desired depth, it is possible to form a desired air pressure within the gap between the bearing housing and a high speed rotating shaft. The device of this invention quickly forms the microgrooves on the internal surface of an aerodynamic bearing housing, and so the device accomplishes high productivity while producing aerodynamic bearings.

When an insulating material is filled in the grooves of the roller electrode, it is possible to form microgrooves, having a desired rectangular cross-section and a desired depth, on the internal surface of the bearing housing.

Another advantage of the device of this invention resides in that the device has a simple construction. Therefore, the device is manufactured through a simple process at a low production cost.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A device for machining pluralities of microgrooves on an internal surface of a cylindrical aerodynamic bearing housing, comprising:
a roller electrode concentrically received within said bearing housing while forming a uniform gap between the roller electrode and the bearing housing, with a plurality of regularly spaced grooves being formed on an external surface of said roller electrode;
a power source applying a negative voltage to said roller electrode and a positive voltage to said bearing housing; and
means for feeding an electrolyte into the gap between the roller electrode and the bearing housing.

2. The device according to claim 1, wherein an insulating material is filled in said grooves of the roller electrode.

3. The device according to claim 2, wherein said insulating material,, filled in the grooves of the roller electrode, is leveled with lands of the roller electrode, thus forming a continuous external surface of the roller electrode.

4. The device according to claim 1, wherein said roller electrode is provided with an extension shaft at one end thereof and is electrically connected to said power source at said extension shaft.

5. The device according to any one of claims 1 to 4, wherein said grooves of the roller electrode are formed in a herringbone arrangement.

6. The device according to claim 5, wherein said insulating material is an epoxy resin.
